# EUROPÄISCHE PATENTSCHRIFT

(11) **EP 2 542 815 B1**
(45) Veröffentlichungstag und Bekanntmachung des Hinweises auf die Patenterteilung: **05.03.2014**
(21) Anmeldenummer: 10800901.0
(22) Anmeldetag: 03.12.2010
(51) Int. Cl.: F16L 37/098

(54) **STECKVERBINDER FÜR MEDIENLEITUNGEN**
PLUG-TYPE CONNECTOR FOR MEDIA LINES
CONNECTEUR À EMBOÎTEMENT POUR CONDUITES DE FLUIDE

(30) Priorität: 05.03.2010 DE 102010010522
(43) Veröffentlichungstag der Anmeldung: 09.01.2013
(73) Patentinhaber: Voss Automotive GmbH, 51688 Wipperfürth (DE)
(72) Erfinder: LECHNER, Martin, 51789 Lindlar (DE); ZENSES, Frank, 50354 Hürth (DE); ROSOWSKI, Evelin, 51643 Gummersbach (DE)
(74) Vertreter: Patentanwälte Dr. Solf & Zapf
(86) Internationale Anmeldenummer: PCT/EP2010/068806
(87) Internationale Veröffentlichungsnummer: WO 2011/107174

(56) Entgegenhaltungen:
- EP-A1- 0 691 501
- DE-A1-102005 011 777
- DE-U1-202005 015 966

## Beschreibung

Die vorliegende Erfindung betrifft einen Steckverbinder für Medienleitungen (Schlauch- oder Rohrleitungen für beliebige pneumatische oder hydraulische Strömungs- und/oder Druckmedien, wie Gase oder Flüssigkeiten), mit den im Oberbegriff des Anspruchs 1 definierten Merkmalen.

Ein solcher Steckverbinder ist in der Veröffentlichung EP 0 691 501 A1 (B2) beschrieben. Bei diesem bekannten Steckverbinder ist das Löseelement als federelastisches, klammerartiges Clipelement von einer Seite her so radial auf das Steckerteil aufgerastet, dass die Betätigungsabschnitte mit den Schrägflächen zum Spreizen der Rastarme im etwa mittigen Bereich der Rastarme zwischen den Rastnocken und der mit dem Steckerteil verbundenen Seite liegen. Zum manuellen Verschieben des Löseelementes muss dieses seitlich, d. h. aus radialer Richtung, ergriffen werden, wozu es außenseitige Griffmulden aufweist. Aus dieser Ausgestaltung resultieren wegen kurzer wirksamer Hebelarme nicht optimale Verhältnisse zur Einleitung der radialen Spreizkraft. Zudem ist am jeweiligen Einbauort ein großer seitlicher Freiraum erforderlich, um das Löseelement manuell ergreifen zu können. Schließlich weist der bekannte Steckverbinder durch die spezielle Anordnung des gesamten Löseelementes zwischen dem Steckerteil und den Rastarmen eine insgesamt große Baugröße auf.

Der vorliegenden Erfindung liegt die Aufgabe zu Grunde, einen Steckverbinder der beschriebenen Art zu schaffen, der bei kompakter Bauform verbesserte Gebrauchseigenschaften insbesondere bezüglich der Handhabung und Spreizkraft-Einleitung beim Lösen gewährleistet.

Erfindungsgemäß wird diese Aufgabe durch einen Steckverbinder gemäß dem unabhängigen Anspruch 1 erreicht. Vorteilhafte Weiterbildungen der Erfindung sind in den abhängigen Ansprüchen sowie der folgenden Beschreibung enthalten.

Das Löseelement weist axiale Lösearmen auf, die sich im radial zwischen den Rastarmen und dem Steckerschaft liegenden Bereich in axialer Richtung zumindest bis in den Bereich der Rastnocken erstrecken, wobei die Betätigungsabschnitte mit den Schrägflächen zum Spreizen der Rastarme derart an den Lösearmen angeordnet sind, dass die Rastarme zum Lösen in unmittelbarer Nähe der Rastnocken mit der Spreizkraft beaufschlagt werden. Somit ist erfindungsgemäß die Stelle der Einleitung der radialen Spreizkraft axial in den freien Endbereich der Rastarme verlagert, so dass ein günstigeres Verhältnis zwischen Hebelarm und Kraft besteht.

Erfindungsgemäß weist der Rastnocken jedes Rastarms eine mittige Unterbrechung auf, durch die der jeweilige Lösearm hindurch verläuft, wobei die Betätigungsabschnitte mit den Schrägflächen im Bereich der Unterbrechungen der Rastnocken gegen die Rastarme wirken. Zweckmäßig weist hier jeder Rastarm im Bereich der Rastnocken-Unterbrechung auch eine entsprechende Gegen-Schrägfläche auf, die gegen die Schrägfläche des zugehörigen Lösearms wirkt.

Zusätzlich kann jeder Rastarm auf seiner dem Steckerschaft zugewandten Innenseite eine axiale, kanalartige Führungsvertiefung für den jeweiligen Lösearm des Löseelementes aufweisen. Diese Führungsvertiefung geht stetig in die Unterbrechung des jeweiligen Rastnockens über. Durch diese vorteilhafte Ausgestaltung verläuft jeder Lösearm in radialer Richtung bereichsweise in der jeweiligen Führungsvertiefung, was auch zu einer Reduzierung der radialen Abmessungen und damit insgesamt zu der angestrebten kompakten Bauform des Steckverbinders führt.

Es ist weiterhin vorteilhaft, wenn die parallel zueinander verlaufenden Lösearme im außerhalb der Rastarme den Rastnocken axial gegenüberliegenden Bereich des Steckerteils über einen Griffabschnitt einstückig verbunden sind. Dazu weist jeder Rastarm in einem seinem freien, den Rastnocken aufweisenden Ende axial gegenüberliegenden, einstückig mit dem Steckerteil verbundenen Basisabschnitt eine Durchführöffnung für den jeweiligen Lösearm des Löseelementes auf. Vorteilhafterweise ist demnach der Griffabschnitt auf der dem Steckerschaft axial gegenüberliegenden Seite angeordnet, so dass er auch bei engen Einbausituationen leicht ergriffen werden kann, und zwar manuell beispielsweise mit Daumen und Zeigefinger oder aber mittels eines geeigneten (handelsüblichen) Werkzeuges (z. B. einer Spitzzange).

Insgesamt ergibt sich durch die erfindungsgemäße Ausgestaltung eine günstige schlanke Bauform, wobei der axiale Verschiebeweg des Löseelementes nahezu beliebig groß gewählt werden kann, weil es keine Beschränkung, wie etwa durch die Länge der Rastarme, gibt.

Die Handhabung des erfindungsgemäßen Steckverbinders ist einfach und komfortabel. Das Steckerteil kann aus einer in ein Aufnahmeteil eingesteckten und gegen ungewolltes Lösen arretierten Stellung heraus zum Lösen recht einfach im Bereich des Löseelementes ergriffen werden, und durch Zug mit einer bestimmten Entriegelungskraft in axialer Richtung erfolgt zunächst die Entriegelung durch Verschieben des Löseelementes und dadurch bedingtes Spreizen der Rastarme. Durch einen weitergehenden Zug mit einer gleichgerichteten Entnahmekraft wird dann das Steckerteil vom Aufnahmeteil gelöst, d. h. der Steckerschaft wird aus der Stecköffnung herausgezogen, denn das erfindungsgemäße Löseelement gelangt vorzugsweise in einer bestimmten Verschiebestellung an einen Zug-Endanschlag, so dass die auf das Löseelement ausgeübte Zug- bzw. Entnahmekraft auf das gesamte Steckerteil übertragen wird, wodurch das Steckerteil mit seinem Steckerschaft herausgezogen werden kann, weil in dieser Zug-Endanschlag-Stellung die Rastarme in einer gespreizten Lösestellung stehen, so dass die Arretierung freigegeben und gelöst ist. Zudem kann auch zum Einstecken das Löseelement im Bereich seines Griffabschnittes ergriffen und damit das gesamte Steckerteil eingesteckt werden, weil das Löseelement bevorzugt auch in Steckerteil-Einsteckrichtung durch einen Druck-Endanschlag in seiner axialen Verschiebebewegung begrenzt wird, und zwar in einer bestimmten Relativstellung, in der die Rastarme in einer ungespreizten und zum Verrasten der Rastnocken bereiten Ausgangslage stehen.

Anhand der Zeichnungen und darin dargestellter, bevorzugter Ausführungsbeispiele soll die Erfindung im Folgenden weitergehend erläutert werden. Dabei zeigen:
- Fig. 1: eine Perspektivansicht einer ersten Ausführungsform eines erfindungsgemäßen Steckverbinders in einer eingesteckten und arretierten Stellung zusammen mit einem Aufnahmeteil,
- Fig. 2: eine Seitenansicht des Steckverbinders in Pfeilrichtung II gemäß Fig. 1, allerdings ohne Aufnahmeteil,
- Fig. 3: eine Ansicht in Pfeilrichtung III gemäß Fig. 2,
- Fig. 4: einen Gesamtschnitt durch den Steckverbinder mit Aufnahmeteil in der Ebene IV-IV gemäß Fig. 2,
- Fig. 5: eine weitere Perspektivansicht des Steckverbinders gemäß Fig. 1 bis 4 ohne Aufnahmeteil im Teilschnitt,
- Fig. 6: mit den Teilfiguren 6a bis 6d, eine explosionsartige Perspektivdarstellung der Einzelteile, und zwar
- Fig. 6a: den Steckverbinder im Teilschnitt ohne Löseelement,
- Fig. 6b: das Löseelement gesondert,
- Fig. 6c: das Aufnahmeteil in einer bevorzugten Ausgestaltung als Adapter und
- Fig. 6d: das Aufnahmeteil gemäß Fig. 9c im Längsschnitt,
- Fig. 7: eine vereinfachte, schematische Ausführung des Steckverbinders zur Erläuterung des Funktionsprinzips, wobei in der rechten Zeichnungshälfte die verriegelte Stellung und in der linken Zeichnungshälfte die Lösestellung veranschaulicht sind,
- Fig. 8: eine alternative Ausgestaltung des erfindungsgemäßen Steckverbinders und
- Fig. 9: eine gesonderte Perspektivansicht des Löseelementes zur Ausführung gem. Fig. 8.

In den verschiedenen Figuren der Zeichnung sind gleiche Teile stets mit den gleichen Bezugszeichen versehen und werden daher in der Regel auch jeweils nur einmal beschrieben.

Ein erfindungsgemäßer Steckverbinder 1 besteht aus einem Steckerteil 2 mit einem Steckerschaft 4. Der Steckerschaft 4 ist in Richtung einer Verbinderlängsachse X in eine Stecköffnung 6 eines Aufnahmeteils 8 einsteckbar, und das Steckerteil 2 ist in dieser eingesteckten Stellung des Steckerschaftes 4 über Verriegelungsmittel lösbar arretierbar, d. h. die Steckverbindung ist gegen ungewolltes Lösen arretiert (gesichert), die Arretierung kann aber zum Lösen der Steckverbindung bei Bedarf aufgehoben (entriegelt) werden. Zur Abdichtung der Steckverbindung ist eine Umfangsdichtung 10 vorgesehen, die bevorzugt in einer äußeren Ringnut am Steckerschaft 4 angeordnet ist.

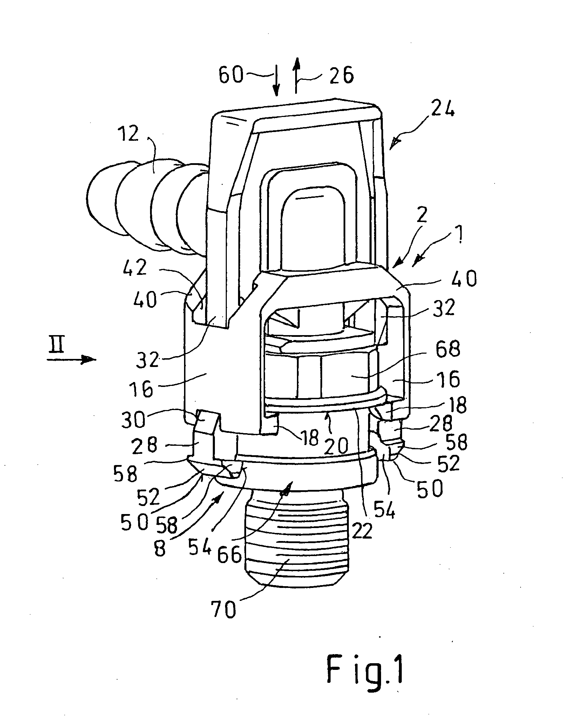

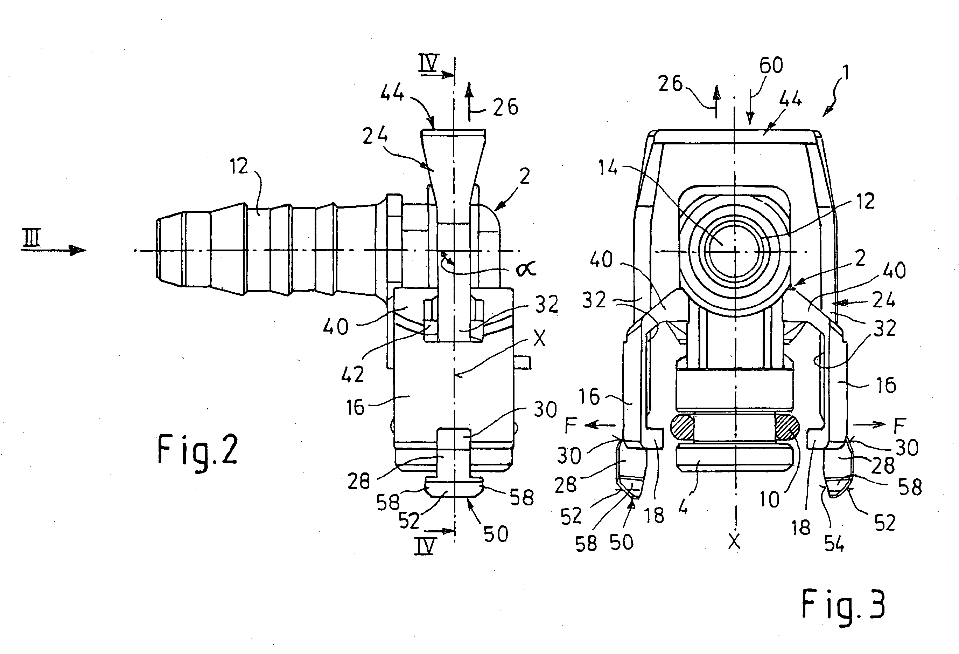

Das Steckerteil 2 dient zum Anschluss (mindestens) einer nicht dargestellten Medienleitung (Schlauch- oder Rohrleitung) an das Aufnahmeteil 8. Hierzu besteht das Steckerteil 2 aus einem Verbindungsabschnitt, der einseitig in den Steckerschaft 4 übergeht, und der anderseitig mindestens einen Leitungsanschluss 12 insbesondere in Form eines sogenannten Anschlussdornes aufweist. Der Leitungsanschluss 12 kann aber alternativ auch analog zu dem Aufnahmeteil 8 mit einer entsprechenden Stecköffnung 6 und einer im Folgenden noch weitergehend beschriebenen Ausgestaltung (vgl. insbesondere die Bezugszeichen 20, 22) ausgebildet sein, so dass der Steckverbinder 1 z. B. einen Winkeladapter bildet. In der Ausführung gemäß Fig. 1 bis 9 ist der Steckverbinder 1 als Winkelverbinder ausgebildet, wobei der Leitungsanschluss 12 in einem Winkel α (siehe Fig. 2) von insbesondere etwa 90 ° zur Längsachse des Steckerschaftes 4 ausgerichtet ist. Gemäß Fig. 13 kann es sich bei dem Steckverbinder 1 aber auch um einen Durchgangsverbinder handeln, wobei der Leitungsanschluss 12 entsprechend der Längsachse des Steckerschaftes 4 in entgegengesetzter Richtung angeordnet ist. Durch den Leitungsanschluss 12, den Verbindungsabschnitt und den Steckerschaft 4 verläuft ein innerer durchgehender Kanal 14 (vgl. Fig. 3, 4, 5, 6a und 7).

Zum Verriegeln des Steckerteils 2 mit dem Aufnahmeteil 8 im eingesteckten Zustand des Steckerschaftes 4 weist das Steckerteil 2 als Verriegelungsmittel vorzugsweise zwei einander diametral gegenüberliegende, federelastische Rastarme 16 auf, die sich in Steckrichtung jeweils mit radialem Abstand zum Steckerschaft 4 erstrecken und an ihren freien Enden radial nach innen ragende Rastnocken 18 aufweisen. Im eingesteckten Zustand - siehe insbesondere Fig. 1, 4, 7 und 8 - hintergreifen die Rastarme 16 mit den Rastnocken 18 eine radiale Raststufe 20 des Aufnahmeteils 8; es handelt sich um eine sogenannte schnappbare Formschlussverbindung, weil die Rastnocken 18 mit der Raststufe 20 über Wirkflächen mit einem Hinterschneidungswinkel ≥ 90 ° zusammenwirken. Die Raststufe 20 des Aufnahmeteils 8 ist bevorzugt von einem umlaufenden, sich radial nach außen erstreckenden Ringsteg 22 gebildet. Die Rastnocken 18 weisen derartige Schrägflächen auf, dass beim Einstecken des Steckerschaftes 4 in die Stecköffnung 6 durch Anlage am Ringsteg 22 des Aufnahmeteils 8 die Rastarme 16 selbsttätig radial nach außen federelastisch gespreizt werden, bis die Rastnocken 18 hinter die Raststufe 20 einschnappen. Das Steckerteil 2 ist hierdurch gegen ungewolltes Lösen gesichert. Allerdings kann das Steckerteil 2 nachfolgend auch wieder gelöst, d. h. herausgezogen werden, wozu die Rastarme 16 mittels eines Löseelementes 24 radial nach außen spreizbar sind. Dazu ist das Löseelement 24 am Steckerteil 2 axial verschiebbar und unverlierbar geführt, und das Löseelement 24 wirkt hierbei derart mit den Rastarmen 16 zusammen, dass die Rastarme 16 durch ein - entsprechend der Verbinderlängsachse X - axiales Verschieben des Löseelementes 24 in Herausziehrichtung (Pfeil 26) des Steckerteils 2 radial gespreizt werden, indem das Löseelement 24 mit jeweils einem Betätigungsabschnitt 28 radial von innen über Schrägflächen 30 mit einer - nach dem Prinzip der schiefen Ebenen entstehenden-radialen Spreizkraft F gegen die Rastarme 16 wirkt. Dazu sind die Schrägflächen 30 des Löseelementes 24 derart schräg zur Längsachse ausgerichtet, dass sich die Betätigungsabschnitte 28 in Einsteckrichtung über die Schrägflächen 30 radial nach außen verbreitern.

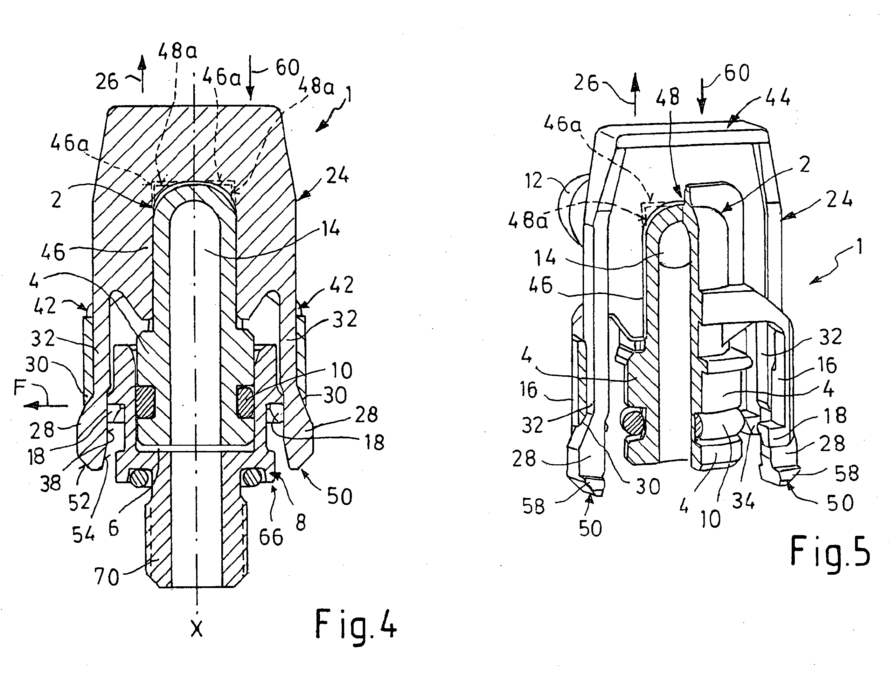

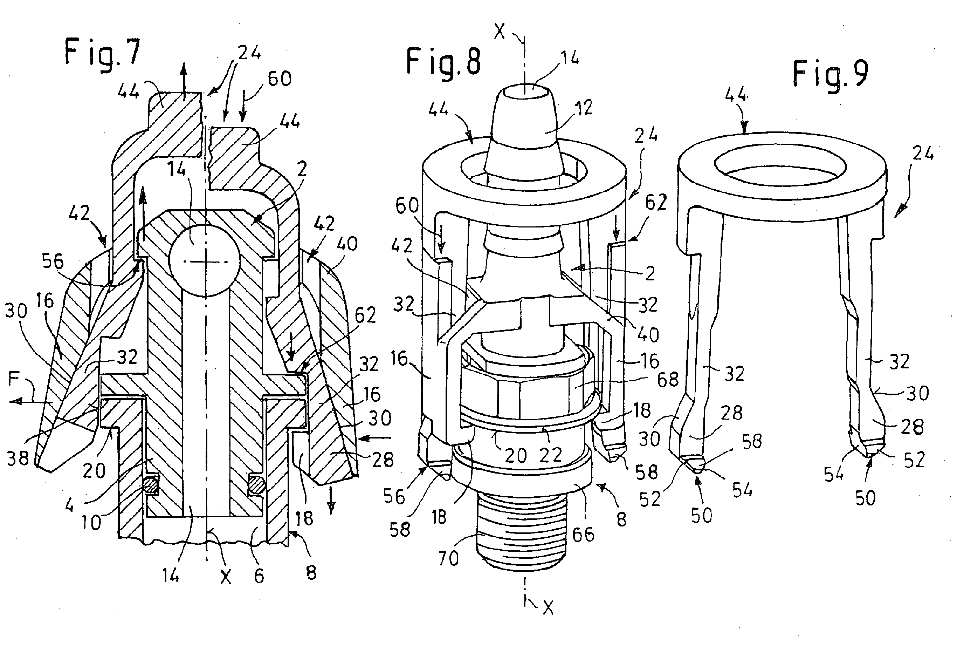

Erfindungsgemäß weist nun das Löseelement 24 Lösearme 32 auf, die sich im radial zwischen den Rastarmen 16 und dem Steckerschaft 4 liegenden Bereich in axialer Richtung zumindest bis in den Bereich der Rastnocken 18 erstrecken. Dabei sind die bereits erwähnten Betätigungsabschnitte 28 mit den Schrägflächen 30 zum Spreizen der Rastarme 16 derart an den Lösearmen 32 angeordnet, dass die Rastarme 16 zum Lösen im Bereich der Rastnocken 18 mit der Spreizkraft F beaufschlagt werden. Dazu wird insbesondere auf die Schnittdarstellungen in Fig. 4 und 7 verwiesen.

Wie am besten in Fig. 5 zu erkennen ist, weist jeder Rastnocken 18, der sich insgesamt über einen bestimmten Umfangsbereich erstreckt, eine mittige Unterbrechung 34 auf, durch die hindurch der jeweilige Lösearm 32 verläuft. Die Betätigungsabschnitte 28 der Lösearme 32 wirken mit den Schrägflächen 30 im Bereich dieser Unterbrechungen 34 der Rastnocken 18 gegen die Rastarme 16. Zweckmäßig weist in diesem Bereich jeder Rastarm 16 auch eine entsprechende Gegen-Schrägfläche auf (siehe auch hierzu insbesondere die Darstellung in Fig. 5).

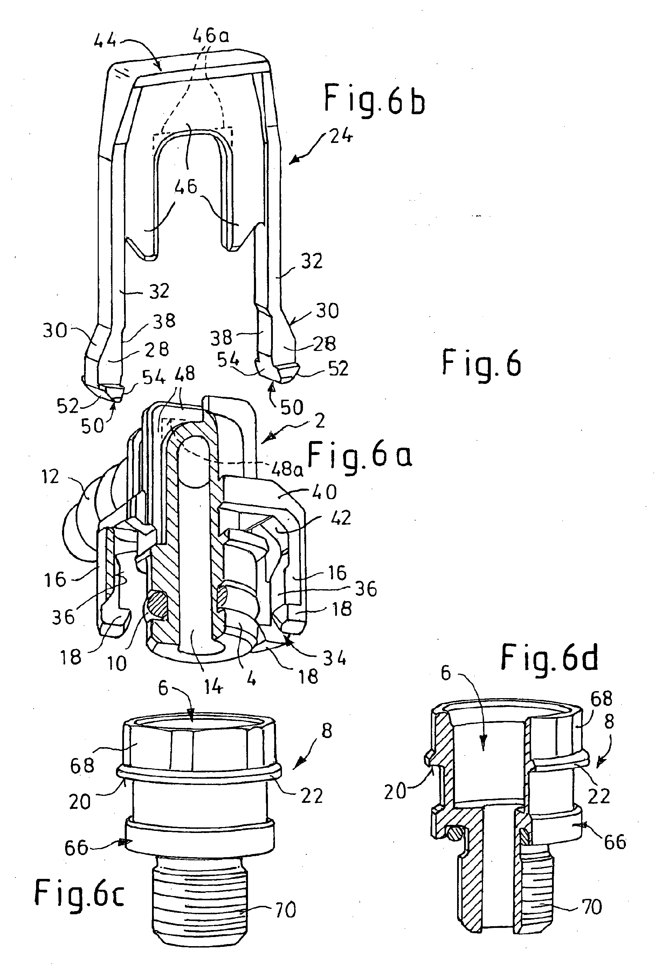

In weiterer vorteilhafter Ausgestaltung - siehe dazu insbesondere Fig. 6a - weist jeder Rastarm 16 auf seiner dem Steckerschaft 4 zugewandten Innenseite eine axiale, kanalartige Führungsvertiefung 36 für den jeweiligen Lösearm 32 des Löseelementes 24 auf. Dabei geht die Führungsvertiefung 36 stetig in die Unterbrechung 34 zwischen den Rastnocken 18 über. Somit verläuft jeder Lösearm 32 durch die jeweilige Führungsvertiefung 36 und dann weiter durch die Unterbrechung 34 der Rastnocken 18. Die kanalartigen Führungsvertiefungen 36 können als Führungsnuten so gestaltet sein, dass die Lösearme 32 zwangsgeführt sind.

Damit die Lösearme 32 über die Schrägflächen 30 bei Bewegung in Pfeilrichtung 26 die Spreizkraft F für die Rastarme 16 bewirken können, müssen sie radial innen abgestützt werden. Dazu weisen die Lösearme 32 radial innere Stützflächen 38 zur radial inneren Abstützung durch Anlage am Steckerteil 2 und/oder am Aufnahmeteil 8 während des Spreizvorganges der Rastarme 16 auf. Bei der Ausführungsform gemäß Fig. 1 bis 6 wirken die Stützflächen 38 nur mit dem Aufnahmeteil 8 zusammen, indem sie insbesondere an dem Ringsteg 22 anliegen; siehe dazu insbesondere Fig. 4.

Demgegenüber ist in Fig. 7 beispielhaft dargestellt, dass die Stützflächen 38 sowohl an dem Aufnahmeteil im Bereich des die Raststufe 20 bildenden Ringsteges 22 anliegen als auch zusätzlich am Steckerteil 2 im Bereich eines radialen Ansatzes. Grundsätzlich kann auch eine Anlage der Stützflächen 38 nur an geeigneten Abschnitten des Steckerteils 2 vorgesehen sein.

In weiterer bevorzugter Ausgestaltung ist jeder Rastarm 16 in seinem dem Rastnocken 18 axial gegenüberliegenden Bereich über einen Basisabschnitt 40 einstückig mit dem Steckerteil 2 verbunden. Im Bereich jedes Basisabschnittes 40 ist nun eine fensterartige Durchführöffnung 42 für den jeweiligen Lösearm 32 des Löseelementes 24 gebildet. Auf diese Weise können die parallel zueinander verlaufenden Lösearme 32 im außerhalb der Rastarme 16 den Rastnocken 18 axial gegenüberliegenden Bereich des Steckerteils 2 über einen Griffabschnitt 44 einstückig verbunden sein.

In der ersten Ausführung gemäß Fig. 1 bis 6 ist das Löseelement 24 als insgesamt etwa U-förmiger Schieber mit zwei parallelen Lösearmen 32 und einem als Griffabschnitt 44 fungierenden Verbindungssteg ausgebildet. Hierbei weist das Löseelement 24 - siehe insbesondere Fig. 6b - einen inneren, stegartigen Führungsabschnitt 46 auf, der in einer nutartigen Führungskontur 48 des Steckerteils 2 verschiebbar und gegen Verkippen gesichert geführt ist. Bei dem dargestellten Ausführungsbeispiel ist die Führungskontur 48 im Bereich der Innenwinkel des U-förmigen Führungsabschnittes 46 verrundet. Wie jedoch in Fig. 4 und 5 sowie in Fig. 6a und 6b beispielhaft gestrichelt eingezeichnet ist, kann durch eine rechteckige Kontur 48a der nutartigen Führung 48 und eine entsprechend rechteckige Gegenkontur 46a des Führungsabschnittes 46 eine Verlängerung der wirksamen Führungslänge erreicht werden.

Die U-förmige Ausgestaltung des Löseelementes 24 ist speziell für den Winkelverbinder gemäß Fig. 1 bis 6 geeignet, da hierbei der Griffabschnitt 44 das Steckerteil 2 diametral zur Längsachse des Steckerschaftes 4 übergreifen kann.

Im Falle des in Fig. 8 dargestellten Durchgangsverbinders ist der die Lösearme 32 verbindende Griffabschnitt 44 von einem dem Leitungsanschluss 12 mit Abstand konzentrisch vollständig (z. B. geschlossen kreisförmig) oder teilweise umfangsgemäß offen (z. B. halbkreisförmig) umschließenden Ringteil gebildet. Der radiale Abstand zwischen dem Leitungsanschluss 12 und dem ringförmigen Griffabschnitt 44 ist so bemessen, dass eine Leitung auf den Anschluss 12 aufgesteckt werden kann.

Für einen Durchgangsverbinder wie in Fig. 8 kann alternativ auch ein Löseelement ähnlich der Ausführung gemäß Fig. 1 bis 6 verwendet werden, wenn der Griffabschnitt 44 relativ zu den Lösearmen 32 und der von diesen definierten Mittelebene zu einer Seite so versetzt, d. h. verkröpft ist, dass er mit ausreichendem Abstand neben dem Leitungsanschluss 12 angeordnet ist. Dabei ist ein Versatz zwischen dem Griffabschnitt 44 und dem Leitungsanschluss 12 so ausgelegt und bemessen, dass eine Leitung auf den Anschluss 12 aufgesteckt werden kann.

Das Löseelement 24 kann auch zusammen mit dem Steckerteil 2 mit dem Verfahren des so genannten Montagespritzgießens hergestellt werden. Dazu wird vorzugsweise das Steckerteil 2 in einem ersten Schritt aus einem ersten Werkstoff, vorzugsweise PA, hergestellt und in einem zweiten Schritt das Löseelement 24 aus einem zweiten Werkstoff eingespritzt. Dieser zweite Werkstoff, beispielsweise PP, PE, POM, hat eine geringere Schmelztemperatur als der erste Werkstoff des Steckerteils 2 und geht deshalb keine stoffschlüssige Verbindung mit dem ersten Werkstoff des Steckerteils 2 ein. Dadurch wird der Herstellungsprozess qualitativ verbessert, da die Montage vereinfacht und der Logistikaufwand verringert wird.

Wie sich weiterhin aus den Zeichnungsfiguren ergibt, weist jeder Lösearm 32 des Löseelementes 24 einen sich axial über das freie Ende des jeweiligen Rastarmes 16 und über den Rastnocken 18 hinaus erstreckenden Führungsabschnitt 50 mit radial inneren und äußeren Schrägflächen 52, 54 auf. Hierbei dienen die äußeren Schrägflächen 52 als Einführschrägen bei der Montage des Löseelementes 24, d. h. beim Einstecken der Lösearme 32 durch die Durchführöffnungen 42 der Basisabschnitte 40 der Rastarme 16. Durch die inneren Schrägflächen 54 wird sichergestellt, dass die Lösearme 32 den Steckvorgang nicht behindern können, sondern dass sie über die Schrägflächen 54 mit ihren Stützflächen 38 zur Abstützung auf die Umfangskontur, insbesondere den Ringsteg 22, des Aufnahmeteils 8 geführt werden.

Um das Löseelement 24 über seinen Griffabschnitt 44 auch zur Handhabung beim Stecken und Lösen des gesamten Steckerteils 2 verwenden zu können, ist in weiterer vorteilhafter Ausgestaltung vorgesehen, dass das Löseelement 24 in Steckerteil-Löserichtung (Pfeile 26) durch einen Zug-Endanschlag 56 in seiner axialen Verschiebebewegung begrenzt wird, und zwar in einer Relativstellung, in der die Rastarme 16 in einer gespreizten Lösestellung stehen. In der bevorzugten Ausführung gemäß Fig. 1 bis 6 ist der Zug-Endanschlag 56 zwischen etwa T-förmig verbreiterten Abschnitten 58 im Bereich der Führungsabschnitte 50 der Lösearme 32 und freien Endflächen der Rastarme 16 gebildet. Wie sich beispielsweise aus Fig. 3 und 5 ergibt, gelangen nach einer Zugbewegung in Pfeilrichtung 26 die verbreiterten Abschnitte 58 zur Anlage an den unteren Stirnflächen der Rastarme 16.

Weiterhin ist das Löseelement 24 auch in Steckerteil-Einsteckrichtung (Pfeile 60) durch einen Druck-Endanschlag 62 in seiner axialen Verschiebebewegung begrenzt, und zwar in einer Relativstellung, in der die Rastarme 16 in einer ungespreizten und zum federelastischen Verrasten bereiten Ausgangslage stehen. Bei der Ausführung gemäß Fig. 1 bis 6 wird der Druck-Endanschlag 62 auf der dem Griffabschnitt 44 zugewandten Seite des Steckerteils 2 durch den in die Führungskontur 48 eingreifenden Führungsabschnitt 46 gebildet.

In den Figuren 7 und 8 sind mögliche Alternativen zur Realisierung der Endanschläge 56, 62 dargestellt, die auch ohne weitere Erläuterungen verständlich sein dürften.

In den dargestellten Ausführungsbeispielen ist das Aufnahmeteil 8 als Verbindungs-Adapter 66 ausgebildet, wobei dieser Adapter 66 bevorzugt an die Mündungsseite der Stecköffnung 6 angrenzend zunächst einen Außensechskant 68 und daran angrenzend die Raststufe 20 sowie der Stecköffnung 6 gegenüberliegend einen Verschraubungsabschnitt 70 aufweist. An Stelle des Außensechskantes 68 kann auch ein beliebiger anderer Außenkraftangriff für ein Drehwerkzeug vorgesehen sein. Diese Ausführung erleichtert die Montage des Adapters 66, da das Verschrauben mittels eines üblichen Steckschlüssels erfolgen kann. Der Verschraubungsabschnitt 70 ist als Einschraubstutzen mit einem Außengewinde ausgebildet. Diese Anordnung führt zu einer vorteilhaften Bauraumoptimierung, da der Außensechskant 68 vom Steckerteil 2 überdeckt wird und somit die Bauraumhöhe des Steckverbinders 1 reduziert wird. Zweckmäßigerweise ist das Steckerteil 2 zusammen mit den Rastarmen 16 als einstückiges Formteil aus Kunststoff gebildet. Entsprechendes gilt auch für das Löseelement 24 mit seinen Lösearmen 32.

In weiterer vorteilhafter Ausgestaltung kann im Bereich des Griffabschnittes 44 des Löseelementes 24 bevorzugt beidseitig eine Riffelung oder dergleichen Kontur für einen besseren "Grip" für ein Handmontage vorgesehen sein. Das Löseelement 24 kann auch jeweils eine Öffnung aufweisen, um bei der Montage und Demontage ein geeignetes Hilfswerkzeug ansetzen zu können.

Abweichend von den bisher beschriebenen Ausführungsbeispielen, bei denen zwei Rastarme 16 und entsprechend auch zwei Lösearme 32 vorgesehen sind, kann der erfindungsgemäße Steckverbinder 1 auch mehr als zwei Rastarme 16 mit einer entsprechenden Anzahl von Lösearmen 32 aufweisen.

Die Erfindung ist nicht auf die dargestellten und beschriebenen Ausführungsbeispiele beschränkt, sondern umfasst auch alle Ausführungen gemäß den Ansprüchen.

## Patentansprüche

1. Steckverbinder (1) für Medienleitungen, bestehend aus einem Löseelement (24) und aus einem Steckerteil (2) mit einem in eine Stecköffnung (6) eines Aufnahmeteils (8) einsteckbaren und über Verriegelungsmittel lösbar arretierbaren Steckerschaft (4), wobei das Steckerteil (2) als Verriegelungsmittel mindestens zwei federelastische Rastarme (16) aufweist, die sich in Steckrichtung jeweils mit radialem Abstand zum Steckerschaft (4) erstrecken und an ihren freien Enden radial nach innen ragende Rastnocken (18) zum rastenden Hintergreifen einer Raststufe (20) des Aufnahmeteils (8) aufweisen, wobei die Rastarme (16) zum Lösen der Arretierung des Steckerteils (2) mittels des Löseelementes (24) radial nach außen spreizbar sind, wobei das Löseelement (24) am Steckerteil (2) axial verschiebbar angeordnet ist und derart mit den Rastarmen (16) zusammenwirkt, dass die Rastarme (16) durch ein Verschieben des Löseelementes (24) radial gespreizt werden, indem das Löseelement (24) mit jeweils einem Betätigungsabschnitt (28) radial von innen über Schrägflächen (30) mit einer Spreizkraft (F) gegen die Rastarme (16) wirkt, wobei das Löseelement (24) im radial zwischen den Rastarmen (16) und dem Steckerschaft (4) liegenden Bereich sich axial zumindest bis in den Bereich der Rastnocken (18) erstreckende Lösearme (32) aufweist, wobei die Betätigungsabschnitte (28) mit den Schrägflächen (30) zum Spreizen der Rastarme (16) derart an den Lösearmen (32) angeordnet sind, dass die Rastarme (16) zum Lösen im Bereich der Rastnocken (18) mit der Spreizkraft (F) beaufschlagt werden,
**dadurch gekennzeichnet, dass** der Rastnocken (18) jedes Rastarms (16) eine mittige Unterbrechung (34) aufweist, durch die der jeweilige Lösearm (32) verläuft, wobei die Betätigungsabschnitte (28) mit den Schrägflächen (30) im Bereich der Unterbrechungen (34) der Rastnocken (18) gegen die Rastarme (16) wirken.

2. Steckverbinder nach Anspruch 1,
**dadurch gekennzeichnet, dass** jeder Rastarm (16) auf seiner dem Steckerschaft (4) zugewandten Innenseite eine axiale, kanalartige Führungsvertiefung (36) für den jeweiligen Lösearm (32) des Löseelementes (24) aufweist.

3. Steckverbinder nach Anspruch 1 oder 2,
**dadurch gekennzeichnet, dass** die Lösearme (32) radial innere Stützflächen (38) zur radial abstützenden Anlage am Steckerteil (2) und/oder am Aufnahmeteil (8) während des Spreizvorganges der Rastarme (16) aufweisen.

4. Steckverbinder nach einem der Ansprüche 1 bis 3,
**dadurch gekennzeichnet, dass** jeder Rastarm (16) in einem seinem freien, den Rastnocken (18) aufweisenden Ende axial gegenüberliegenden, einstückig mit dem Steckerteil (2) verbundenen Basisabschnitt (40) eine Durchführöffnung (42) für den jeweiligen Lösearm (32) des Löseelementes (24) aufweist.

5. Steckverbinder nach einem der Ansprüche 1 bis 4,
**dadurch gekennzeichnet, dass** die parallel zueinander verlaufenden Lösearme (32) im außerhalb der Rastarme (16) den Rastnocken (18) axial gegenüberliegenden Bereich über einen Griffabschnitt (44) einstückig verbunden sind.

6. Steckverbinder nach einem der Ansprüche 1 bis 5,
**dadurch gekennzeichnet, dass** das Löseelement (24) etwa U-förmig mit zwei Lösearmen (32) und einem diese verbindenden, als Griffabschnitt (44) fungierenden Verbindungssteg ausgebildet ist.

7. Steckverbinder nach einem der Ansprüche 1 bis 6,
**dadurch gekennzeichnet, dass** das Löseelement (24) einen inneren, stegartigen Führungsabschnitt (46) aufweist, der in einer nutartigen Führungskontur (48) des Steckerteils (2) verschiebbar und kippfrei geführt ist.

8. Steckverbinder nach einem der Ansprüche 6 oder 7,
**dadurch gekennzeichnet, dass** das Steckerteil (2) als Winkelverbinder ausgebildet ist und mindestens einen Leitungsanschluss (12) aufweist, der in einem Winkel (α) kleiner 180 °, insbesondere von etwa 90 °, zur Längsachse des Steckerschaftes (4) verläuft, wobei der den Griffabschnitt (44) bildende Verbindungssteg des Löseelementes (24) den Übergangsbereich zwischen dem Steckerschaft (4) und dem Leitungsanschluss (12) diametral zur Steckerschaft-Längsachse übergreift.

9. Steckverbinder nach Anspruch 5,
**dadurch gekennzeichnet, dass** das Steckerteil (2) als Durchgangsverbinder mit einem Leitungsanschluss (12) ausgebildet ist, der sich entsprechend der Längsachse des Steckerschaftes (4) in entgegengesetzter Richtung erstreckt, wobei der die Lösearme (32) verbindende Griffabschnitt (44) des Löseelementes (24) entweder von einem den Leitungsanschluss (12) konzentrisch mit radialem Abstand umschließenden Ringteil gebildet oder relativ zu den Lösearmen (32) und einer Verbinderlängsachse (X) in einen mit Abstand neben dem Leitungsanschluss (12) liegenden Bereich versetzt angeordnet ist.

10. Steckverbinder nach einem der Ansprüche 1 bis 9,
**dadurch gekennzeichnet, dass** jeder Lösearm (32) des Löseelementes (24) einen sich axial über das freie Ende des Rastarms (16) und den Rastnocken (18) hinaus erstreckenden Führungsabschnitt (50) mit radial inneren und äußeren Schrägflächen (52, 54) aufweist.

11. Steckverbinder nach einem der Ansprüche 1 bis 10,
**dadurch gekennzeichnet, dass** das Löseelement (24) in Steckerteil-Löserichtung (26) durch einen Zug-Endanschlag (56) in seiner Verschiebebewegung begrenzt wird, und zwar in einer Relativstellung, in der die Rastarme (16) in einer gespreizten Lösestellung stehen.

12. Steckverbinder nach Anspruch 11,
**dadurch gekennzeichnet, dass** der Zug-Endanschlag (56) zwischen etwa T-förmig verbreiterten, die Rastarme (16) axial überragenden Enden (58) der Lösearme (32) und freien Endflächen der Rastarme (16) gebildet ist.

13. Steckverbinder nach einem der Ansprüche 1 bis 12,
**dadurch gekennzeichnet, dass** das Löseelement (24) in Steckerteil-Einsteckrichtung (60) durch einen Druck-Endanschlag (62) in seiner Verschiebebewegung begrenzt wird, und zwar in einer Relativstellung, in der die Rastarme (16) in einer ungespreizten und zum Verrasten der Rastnocken (18) bereiten Ausgangslage stehen.

14. Steckverbinder nach Anspruch 13,
**dadurch gekennzeichnet, dass** der Druck-Endanschlag (62) durch Anlageflächen von Löseelement (24) und Steckerteil (2) insbesondere im außerhalb der Rastarme (16) auf der den Rastnocken (18) gegenüberliegenden Seite liegenden Bereich gebildet ist.

15. Steckverbinder nach einem der Ansprüche 1 bis 14,
**dadurch gekennzeichnet, dass** das Aufnahmeteil (8) als Bestandteil eines beliebigen Aggregates oder als Verbindungs-Adapter (66) ausgebildet ist, wobei der Adapter (66) bevorzugt an die Mündungsseite der Stecköffnung (6) anschließend zunächst einen - bevorzugt als Außensechskant (68) ausgebildeten - Werkzeug-Kraftangriff und daran angrenzend die Raststufe (20) sowie der Stecköffnung (6) gegenüberliegend einen Verschraubungsabschnitt (70) aufweist.

## Claims

1. A plug connector (1) for media lines, consisting of a release element (24) and a plug part (2) having a plug shaft (4), which can be inserted in a plug opening (6) of a receiving part (8) and releasably locked via locking means, wherein the plug part (2) has at least two spring elastic latching arms (16) as locking means, which extend in the insertion direction at a radial distance with respect to the plug shaft (4) and have radially inwardly projecting catch cams (18) at their free ends for lockingly engaging behind a latching step (20) of the receiving part (8), wherein the latching arms (16) can be spread radially outwardly by means of the release element (24) in order to release the locking of the plug part (2), the release element (24) is axially displaceably arranged on the plug part (2) and interacts in such a way with the latching arms (16) that the latching arms (16) are radially spread by displacing the release element (24) in that the release element (24) acts radially from inside with a spreading force (F) with respectively one actuating section (28) against the latching arms (16) via angular faces (30), wherein the release element (24) has axially extending release arms (32), which extend at least up to the area of the catch cams (18), in the area located radially between the latching arms (16) and the plug shaft (4), wherein the actuating sections (28) with the angular faces (30) are arranged in such a way on the release arms (32) for spreading the latching arms (16) that the latching arms (16) are acted upon with the spreading force (F) for release in the area of the catch cams (18), **characterized in that** the catch cam (18) of each latching arm (16) has a central interruption (34), through which the respective release arm (32) passes, wherein the actuating sections (28) with the angular faces (30) act against the latching arms (16) in the region of the interruptions (34) of the catch cams (18).

2. The plug connector according to claim 1,
**characterized in that** each latching arm (16) has an axial channel-like guide recess (36) on its inner side that faces toward the plug shaft (4) for the respective release arm (32) of the release element (24).

3. The plug connector according to claim 1 or 2,
**characterized in that** the release arms (32) have radially inner support surfaces (38) for radial supporting abutment against the plug part (2) and/or the receiving part (8) during the spreading procedure of the latching arms (16).

4. The plug connector according to one of the claims 1 to 3,
**characterized in that** each latching arm (16) has a through opening (42) for the respective release arm (32) of the release element (24) in a base section (40) integrally connected to the plug part (2) axially opposite to its free end having the catch cam (18).

5. The plug connector according to one of the claims 1 to 4,
**characterized in that** the release arms (32) running parallel with respect to each other are integrally connected outside of the latching arms (16) via a grasping section (44) in the area axially opposite to the catch cam (18).

6. The plug connector according to one of the claims 1 to 5,
**characterized in that** the release element (24) is configured approximately in U-shape with two release arms (32) and a connecting web that functions as grasping section (44) and connects said release arms.

7. The plug connector according to one of the claims 1 to 6,
**characterized in that** the release element (24) has an inner web-like guide section (46), which can be displaced and is guided against tipping within a groove-like guide contour (48) of the plug part (2).

8. The plug connector according to one of the claims 6 or 7,
**characterized in that** the plug part (2) is configured as an angular connector and has at least one line connection (12), which runs at an angle (α) of less than 180°, in particular of about 90°, with respect to the longitudinal axis of the plug shaft (4), wherein the connecting web of the release element (24) that forms the grasping section (44) diametrically overlaps the transition section between the plug shaft (4) and the line connection (12) with respect to the longitudinal axis of the plug shaft (4).

9. The plug connector according to claim 5,
**characterized in that** the plug part (2) is configured as through connector with the line connection (12), which extends in opposite direction corresponding to the longitudinal axis of the plug shaft (4), wherein the grasping section (44) of the release element (24) that connects the release arms (32) is formed either by a ring part that concentrically encloses at a radial distance the line connection (12) or is arranged offset relative to the release arms (32) and a longitudinal axis (X) of the connector in an area located at a distance beside the line connection (12).

10. The plug connector according to one of the claims 1 to 9,
**characterized in that** each release arm (32) of the release element (24) has a guide section (50) with radially inner and outer angular faces (52, 54) extending axially over the free end of the latching arm (16) and the catch cam (18).

11. The plug connector according to one of the claims 1 to 10,
**characterized in that** the release element (24) is limited in its displacement movement in release direction (26) of the plug part by means of a pull end stop (56), and namely in a relative position in which the latching arms (16) are in a spread release position.

12. The plug connector according to claim 11,
**characterized in that** the pull end stop (56) is formed between approximately T-shaped expanded ends (58) of the release arms (32), which axially project over the latching arms (16), and free end faces of the latching arms (16).

13. The plug connector according to one of the claims 1 to 12,
**characterized in that** the release element (24) is limited in the insertion direction (60) of the plug part by means of a pressure end stop (62), and namely in a relative position in which the latching arms (16) are in an initial position in which they are not spread and are ready for locking the catch cams (18).

14. The plug connector according to claim 13,
**characterized in that** the pressure end stop (62) is formed by means of the abutment faces of the release element (24) and the plug part (2), in particular in the area located outside of the latching arms (16) on the side opposite to the catch cams (18).

15. The plug connector according to one of the claims 1 to 14,
**characterized in that** the receiving part (8) is configured as a component of any desired unit or as a connection adapter (66), wherein the adapter (66), which preferably connects to the outlet side of the plug opening (6), has first a tool force engagement - preferably configured as a hexagon head (68) - and adjacent thereto the latching step (20) as well as the plug opening (6) located opposite to a screw section (70)

## Revendications

1. Raccord par emboîtement (1) pour conduites de fluide, constitué d'un élément de déblocage (24) et d'une partie à emboîter (2) dotée d'une tige à emboîter (4) pouvant être insérée dans une ouverture d'emboîtement (6) d'une partie de réception (8) et pouvant être bloquée de manière amovible par l'intermédiaire de moyens de verrouillage, dans lequel la partie à emboîter (2) présente, en tant que moyens de verrouillage, au moins deux bras d'enclenchement (16) élastiques, qui s'étendent dans la direction d'emboîtement respectivement à une distance radiale par rapport à la tige à emboîter (4) et qui présentent, au niveau de leurs extrémités libres, des cames d'enclenchement (18) faisant saillie radialement vers l'intérieur servant à revenir en prise par l'arrière par enclenchement avec un cran d'enclenchement (20) de la partie de réception (8), dans lequel les bras d'enclenchement (16) peuvent être écartés radialement vers l'extérieur au moyen de l'élément de déblocage (24) afin de débloquer le blocage de la partie à emboîter (2), dans lequel l'élément de déblocage (24) est disposé au niveau de la partie à emboîter (2) de manière à pouvoir être déplacé axialement par coulissement et coopère avec les bras d'enclenchement (16) de telle manière que les bras d'enclenchement (16) sont écartés radialement du fait d'un déplacement par coulissement de l'élément de déblocage (24) en ce que l'élément de déblocage (24) doté respectivement d'une section d'actionnement (28) agit radialement de l'intérieur par l'intermédiaire de faces obliques (30) avec une force d'écartement (F) à l'encontre des bras d'enclenchement (16), dans lequel l'élément de déblocage (24) présente, dans la zone se trouvant radialement entre les bras d'enclenchement (16) et la tige à emboîter (4), des bras de déblocage (32) s'étendant axialement au moins jusque dans la zone des cames d'enclenchement (18), dans lequel les sections d'actionnement (28) dotées des faces obliques (30) servant à écarter les bras d'enclenchement (16) sont disposées au niveau des bras de déblocage (32) de telle manière que les bras d'enclenchement (16) destinés à être débloqués dans la zone des cames d'enclenchement (18) sont soumis à l'action de la force d'écartement (F), **caractérisé en ce que** la came d'enclenchement (18) de chaque bras d'enclenchement (16) présente une zone d'interruption (34) centrale, à travers laquelle le bras de déblocage respectif (32) s'étend, dans lequel les sections d'actionnement (28) dotées des faces obliques (30) agissent à proximité des zones d'interruption (34) des cames d'enclenchement (18) à l'encontre des bras d'enclenchement (16).

2. Raccord par emboîtement selon la revendication 1,
**caractérisé en ce que** chaque bras d'enclenchement (16) présente, sur son côté intérieur tourné vers la tige à emboîter (4), un creux de guidage (36) axiale de type canal pour le bras de déblocage (32) respectif de l'élément de déblocage (24).

3. Raccord par emboîtement selon la revendication 1 ou 2,
**caractérisé en ce que** les bras de déblocage (32) présentent des faces d'appui (38) radialement intérieures destinées à venir en appui radialement au niveau de la partie à emboîter (2) et/ou au niveau de la partie de réception (8) au cours de l'opération d'écartement des bras d'enclenchement (16).

4. Raccord par emboîtement selon l'une quelconque des revendications 1 à 3,
**caractérisé en ce que** chaque bras d'enclenchement (16) présente, dans une section de base (40), faisant face axialement à son extrémité libre présentant la came d'enclenchement (18), reliée d'un seul tenant à la partie à emboîter (2), une ouverture de passage (42) pour le bras de déblocage (32) respectif de l'élément de déblocage (24).

5. Raccord par emboîtement selon l'une quelconque des revendications 1 à 4,
**caractérisé en ce que** les bras de déblocage (32) s'étendant les uns par rapport aux autres de manière parallèle sont reliés d'un seul tenant par l'intermédiaire d'une section de préhension (44) dans la zone faisant face axialement aux cames d'enclenchement (18) à l'extérieur des bras d'enclenchement (16).

6. Raccord par emboîtement selon l'une quelconque des revendications 1 à 5,
**caractérisé en ce que** l'élément de déblocage (24) est réalisé de manière à présenter approximativement une forme de U avec deux bras de déblocage (32) et une barrette d'assemblage reliant lesdits deux bras de déblocage, faisant office de section de préhension (44).

7. Raccord par emboîtement selon l'une quelconque des revendications 1 à 6,
**caractérisé en ce que** l'élément de déblocage (24) présente une section de guidage (46) intérieure de type barrette, qui est guidée dans un contour de guidage (48) de type rainure de la partie à emboîter (2) de manière à pouvoir être déplacé par coulissement et sans basculement.

8. Raccord par emboîtement selon l'une quelconque des revendications 6 ou 7,
**caractérisé en ce que** la partie à emboîter (2) est réalisée sous la forme d'un raccord d'angle et présente au moins un raccordement de conduite (12), qui s'étend par rapport à l'axe longitudinal de la tige à emboîter (4) selon un angle (α) inférieur à 180°, en particulier selon un angle d'environ 90°, dans lequel la barrette d'assemblage, formant la section de préhension (44), de l'élément de déblocage (24) chevauche la zone de transition entre la tige à emboîter (4) et le raccordement de conduite (12) de manière diamétrale par rapport à l'axe longitudinal de la tige à emboîter.

9. Raccord par emboîtement selon la revendication 5,
**caractérisé en ce que** la partie à emboîter (2) est réalisée sous la forme d'un raccord de passage doté d'un raccordement de conduite (12), qui s'étend dans une direction opposée selon l'axe longitudinal de la tige à emboîter (4), dans lequel la section de préhension (44), reliant les bras de déblocage (32), de l'élément de déblocage (24) est soit formée par une partie annulaire entourant de manière concentrique à une certaine distance radiale le raccordement de conduite (12) soit disposée de manière décalée par rapport aux bras de déblocage (32) et à un axe longitudinal de raccord (X) dans une zone espacée à proximité du raccordement de conduite (12).

10. Raccord par emboîtement selon l'une quelconque des revendications 1 à 9,
**caractérisé en ce que** chaque bras de déblocage (32) de l'élément de déblocage (24) présente une section de guidage (50) s'étendant axialement au-delà de l'extrémité libre du bras d'enclenchement (16) et de la came d'enclenchement (18), dotée de faces obliques (52, 54) radialement intérieures et extérieures.

11. Raccord par emboîtement selon l'une quelconque des revendications 1 à 10,
**caractérisé en ce que** le mouvement de déplacement par coulissement de l'élément de déblocage (24) est limité, dans la direction de déblocage (26) de la partie à emboîter, par une butée de traction-de fin de course (56), à savoir dans une position relative, dans laquelle les bras d'enclenchement (16) se trouvent dans une position de déblocage à l'état écarté.

12. Raccord par emboîtement selon la revendication 11,
**caractérisé en ce que** la butée de traction-de fin de course (56) est formée entre des extrémités (58), s'élargissant de manière à présenter approximativement une forme de T, dépassant axialement les bras d'enclenchement (16), des bras de déblocage (32) et des faces d'extrémité libres des bras d'enclenchement (16).

13. Raccord par emboîtement selon l'une quelconque des revendications 1 à 12,
**caractérisé en ce que** le mouvement de déplacement par coulissement de l'élément de déblocage (24) est limité dans la direction d'insertion (60) de la partie à emboîter par une butée de pression-de fin de course (62), c'est à dire dans une position relative, dans laquelle les bras d'enclenchement (16) se trouvent dans une position de départ à l'état non écarté et appropriée pour l'enclenchement des cames d'enclenchement (18).

14. Raccord par emboîtement selon la revendication 13,
**caractérisé en ce que** la butée de pression-fin de course (62) est formée par des faces d'appui de l'élément de déblocage (24) et de la partie à emboîter (2) en particulier dans la zone se trouvant à l'extérieur des bras d'enclenchement (16) sur le côté faisant face aux cames d'enclenchement (18).

15. Raccord par emboîtement selon l'une quelconque des revendications 1 à 14,
**caractérisé en ce que** la partie de réception (8) est réalisée sous la forme d'une composante d'un groupe quelconque ou sous la forme d'un adaptateur d'assemblage (66), dans lequel l'adaptateur (66) présente, de préférence dans le prolongement du côté d'embouchure de l'ouverture d'emboîtement (6), en premier lieu un dispositif d'application de force pour outil réalisé de préférence sous la forme d'un hexagone mâle (68) et un cran d'arrêt (20) adjacent audit dispositif d'application de force ainsi qu'une section de vissage (70) faisant face à l'ouverture d'emboîtement (6).
